# EUROPÄISCHE PATENTANMELDUNG

(11) **EP 4 597 050 A1**
(43) Veröffentlichungstag der Anmeldung: **06.08.2025**
(21) Anmeldenummer: 25153796.5
(22) Anmeldetag: 24.01.2025
(51) Int. Cl.: G01F 23/292, G01S 17/04, G01S 7/481, G01S 17/10

(54) **OPTISCHER SENSOR**

(30) Priorität: 31.01.2024 DE 202024100461 U
(71) Anmelder: Leuze electronic GmbH + Co. KG, 73277 Owen/Teck (DE)
(72) Erfinder: Scheu, Thomas, 73268 Erkenbrechtsweiler (DE)
(74) Vertreter: Ruckh, Rainer Gerhard

(57) **Zusammenfassung**

Die Erfindung betrifft einen optischen Sensor (1) zur Erfassung von Objekten (5) in einem Erfassungsbereich. Der optische Sensor umfasst einen Lichtstrahlen (2) emittierenden Sendeeinheit (3), einer Lichtstrahlen (2) empfangenen Empfangseinheit (4). Mit einer Steuer- und Auswerteeinheit (6) wird abhängig von Empfangssignalen der Empfangseinheit (4) ein Ausgangssignal generiert. Die Sendeeinheit (3) ist ein Senderarray (10) mit einer Anzahl von Sendeelementen (11), wobei dem Senderarray (10) Einstellmittel zugeordnet sind, mittels derer die Lichtverteilung und Größe des Lichtflecks der emittierten Lichtstrahlen (2) vorgegeben wird. Die Empfangseinheit (4) ist ein Empfängerarray (14) mit einer Anzahl von Empfangselementen (15), wobei dem Empfängerarray (14) Einstellmittel zugeordnet sind, mittels derer der Sichtbereich des Empfängerarrays (14) vorgegeben wird.

## Beschreibung

Die Erfindung betrifft einen optischen Sensor.

Derartige Sensoren werden in unterschiedlichen industriellen Applikationen eingesetzt. Ein Beispiel hierfür ist der Einsatz derartiger Sensoren als Füllstandssensoren. Mit derartigen Sensoren werden Füllstände in Behältern, die mit festen, pulverförmigen oder mit flüssigen Medien befüllt sind, bestimmt.

Vorteilhaft sind derartige Füllstandssensoren als Distanzsensoren ausgebildet. Dabei werden insbesondere Sensoren in Form von Ultraschallsensoren eingesetzt.

Ein Vorteil von Ultraschallsensoren ist deren Unempfindlichkeit gegenüber Fremdlichteinflüssen.

Ein weiterer Vorteil von Ultraschallsensoren besteht darin, dass Objekte unabhängig von deren optischen Eigenschaften wie dem Remissionsgrad detektiert werden können.

Jedoch weisen Ultraschallsensoren einen Blindbereich im unmittelbarem Nahbereich auf, d.h. es können keine sehr kleinen Obj ektdistanzen bestimmt werden. Dies beruht darauf, dass der Ultraschallsensor zur Erzeugung von Ultraschalwellen einen Schallwandler aufweist, der ein mechanisches System bildet, das nach Generierung der Ultraschallwellen erst abklingen muss, bevor eine interne Auswerteschaltung auf Empfangsbetrieb eingestellt werden kann.

Auch sind Ultraschallsensoren empfindlich gegenüber spontanen Temperaturschwankungen, da sich dann die Schallgeschwindigkeit ändert, was zu verfälschten Distanzmessungen führt, wenn diese nach einem Impuls-Laufzeit-Verfahren durchgeführt werden.

Generell ist es bekannt auch optische Sensoren, insbesondere Distanzsensoren als Füllstandssensoren einzusetzen.

Ein Problem bei derartigen optischen Sensoren wie auch bei Ultraschallsensoren sind Störkonturen, die die Distanzmessungen verfälschen können. Soll beispielsweise in einem Behälter ein Füllstand kontrolliert werden, werden Lichtstrahlen des optischen Sensors oder Ultraschallwellen des Ultraschallsensors nicht nur an den im Behälter gelagerten Medium reflektiert, sondern auch an Störkonturen, insbesondere an der Innenseite des Behälters. Dadurch werden mit dem optischen Sensor oder Ultraschallsensor durchgeführte Distanzmessungen verfälscht, was zu einer fehlerhaften Bestimmung des Füllstands führen kann.

Der Erfindung liegt die Aufgabe zugrunde einen Sensor bereitzustellen, mit dem eine sichere störungsunempfindliche Objektdetektion ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten in einem Erfassungsbereich, mit einer Lichtstrahlen emittierenden Sendeeinheit, einer Lichtstrahlen empfangenen Empfangseinheit und mit einer Steuer- und Auswerteeinheit, in welcher abhängig von Empfangssignalen der Empfangseinheit ein Ausgangssignal generiert wird. Die Sendeeinheit ist ein Senderarray mit einer Anzahl von Sendeelementen, wobei dem Senderarray Einstellmittel zugeordnet sind, mittels derer die Lichtverteilung und Größe des Lichtflecks der emittierten Lichtstrahlen vorgegeben wird. Alternativ oder zunächst ist die Empfangseinheit ein Empfängerarray mit einer Anzahl von Empfangselementen. Dem Empfängerarray sind Einstellmittel zugeordnet, mittels derer der Sichtbereich des Empfängerarrays vorgegeben wird.

Der Grundgedanke der Erfindung besteht darin, bei dem optischen Sensor durch Einstellmittel entweder den Lichtfleck, d.h. die Ausdehnung der emittierten Lichtstrahlen quer zu deren Ausbreitungsrichtung, und/oder das Sichtfeld der Empfangseinheit einzustellen und so an die jeweilige Applikation anzupassen.

Die Anpassung des Lichtflecks der von der Sendeeinheit emittierten Lichtstrahlen oder des Sichtfelds der Empfangseinheit erfolgt vorteilhaft an den zu detektierenden Objekten. Da der Lichtfleck der Lichtstrahlen und/oder das Sichtfeld der Empfangseinheit an das jeweils zu detektierende Objekt angepasst ist, können neben dem Objekt liegende Bereiche ausgeblendet werden, so dass diese die Objektdetektionen nicht beeinträchtigen. Insbesondere werden damit Störreflexionen von Lichtstrahlen vermieden.

Durch die Einstellung des Lichtflecks der Lichtstrahlen wird erreicht, dass die Lichtstrahlen nur auf das zu detektierende Objekt treffen, nicht aber auf neben dem Objekt liegende Bereiche, so dass von diesen Bereichen keine Störreflexionen ausgehen können.

Bei einer Einstellung des Sichtfelds der Empfangseinheit werden von neben dem Objekt liegenden Bereichen erhaltene Störreflexionen der Lichtstrahlen empfangsseitig ausgeblendet.

In beiden Fällen wird eine störungsempfindliche Objektdetektion erhalten.

Erfindungsgemäß sind die Sendeeinheit als Sendearray und die Empfangseinheit als Empfängerarray ausgebildet, die mit jeweiligen Einstellmitteln exakt zur Vorgabe des Lichtflecks der Lichtstrahlen bzw. des Sichtbereichs der Empfangseinheit eingestellt werden können.

Vorteilhaft ist der optische Sensor ein Distanzsensor, wobei Distanzmessungen in Form von Impuls-Laufzeit-Messungen durchgeführt werden.

In diesem Fall sind die Ausgangssignale des optischen Sensors Distanzmesswerte oder binäre Schaltsignale.

Die Schaltzustände des Schaltsignals geben dann an, ob sich ein Objekt innerhalb eines Distanzbereichs befindet oder nicht.

Gemäß einer vorteilhaften Ausführungsform ist das Senderarray ein VCSEL (vertical cavity surface emitting laser)-Array. Das Senderarray ist so aufgebaut, dass jeder einzelne VCSEL einzeln ansteuerbar ist. Die Anordnung der einzelnen VCSEL innerhalb des Arrays ist matrixförmig. Für eine Strahlkollimierung der einzelnen VCSEL innerhalb des Arrays kann ein Mikrolinsenarray aufgesetzt werden. Dabei wird jedem VCSEL eine Linse zugeordnet. Dies erfordert eine sehr genaue Positionierung des Mikrolinsenarrays. Dadurch wird aber gewährleistet das sich die einzelnen Lichtstrahlen der benachbarten VCSEL nicht zu sehr überlappen und die Größe des Lichtflecks des einzelnen VCSEL kann damit beeinflusst werden. Die Größe des einzelnen Lichtflecks bestimmt die örtliche Auflösung innerhalb der Messfläche.

Weiter vorteilhaft ist das Empfängerarray ein SPAD (single photon avalanche diode)-Array. Das SPAD-Array besteht aus einer Matrixanordnung von SPADs. Pro Matrixelement können ein oder vorteilhafterweise mehrere SPADs vorhanden sein. Jedes Matrixelement führt Distanzmessungen durch und generiert sein eigenes Histogramm nach einem First-Photon Verfahren über die gemessene Di stanzen

Besteht das Senderarray aus einer Matrix von mehreren VCSEL-Dioden kann der Empfänger aus einer einzelnen SPAD-Diode bestehen. Alternativ können mehrere SPADs zusammengefasst werden und alle gemessenen Distanzen können in ein Ergebnishistogramm eingetragen werden. In diesem Fall strahlt die Sendeeinheit Lichtstrahlen in einem großen Öffnungswinkel ab.

Alternativ besteht das Empfängerarray aus einer Matrix aus mehreren SPAD-Dioden bzw mehreren SPAD-Dioden welche zusammengeschaltet werden zu einzelnen Matrixelementen. Ein Matrixelement besteht dann aus mehreren SPADs. In diesem Fall kann das Senderarray aus einer VCSEL-Diode bestehen oder aus einem VCSEL Array bei welchem die einzelnen VCSEL nicht getrennt ansteuerbar sind, sondern alle gleichzeitig Licht emittieren. Der Öffnungswinkel dieser Sendeeinheit kann falls notwendig durch optische Linsen z.B: Mikrolinsenarray angepasst werden.

Vorteilhaft weist der optische Sensor ein Senderarray mit einer Matrix aus VCSEL-Dioden und ein Empfängerarray mit einer Matrix aus SPAD-Dioden auf.

Gemäß einer vorteilhaften Ausgestaltung ist der optische Sensor ein Füllstandssensor.

In diesem Fall wird durch Distanzmessungen mit dem optischen Sensor der Füllstand von festen, pulverförmigen oder flüssigen Medien in einem Behälter bestimmt.

Durch die erfindungsgemäßen Einstellmittel wird der Lichtfleck der Lichtstrahlen der Sendeeinheit und/oder das Sichtfeld der Empfangseinheit derart optimiert, dass nur das Medium im Behälter detektiert wird, Störreflexionen, die z.B. von Störkonturen an oder im Behälter verursacht sind, jedoch ausgeblendet oder vermieden werden.

Gemäß einer vorteilhaften Ausführungsform werden in einem Einlernvorgang selektiv aktivierte Sendeelemente und/oder Empfangselemente vorgegeben.

In diesem Einlernvorgang werden mit dem optischen Sensor Objekte, insbesondere Behälter, deren Füllstand überprüft werden soll, vermessen und anhand der Messwerte der Lichtfleck der Lichtstrahlen und/oder das Sichtfeld der Empfangseinheit optimiert.

Alternativ werden durch Eingabe von Eingabegrößen über eine Schnittstelle aktivierte Sendeelemente und/oder Empfangselemente vorgegeben.

Die Eingabegrößen, die ein Benutzer vorgeben kann, sind vorteilhaft so gewählt, dass diese für den Benutzer möglichst anschaulich sind. Beispielsweise kann eine Eingabegröße ein Winkel der Lichtstrahlen des optischen Sensors sein. Weiterhin kann eine Eingabegröße sein, in welchem Abstand für den optischen Sensor eine bestimmte Messzone erhalten werden soll.

Gemäß einer ersten vorteilhaften Ausgestaltung sind die Einstellmittel von der Steuer- und Auswerteeinheit gebildet. Mittels der Steuer- und Auswerteeinheit erfolgt eine Adressierung von Sendeelementen und/oder Empfangselementen.

Durch die Adressierung können selektiv einzelne Sendeelemente des Senderarrays aktiviert werden, wodurch die Größe und Form des Lichtflecks der emittierten Lichtstrahlen vorgegeben werden kann.

Durch die Adressierung können weiterhin einzelne Empfangselemente des Empfängerarrays aktiviert werden, wodurch die Größe und Form des Sichtbereichs der Empfangseinheit vorgegeben werden kann.

Gemäß einer weiteren vorteilhaften Ausgestaltung sind die Einstellmittel von Optikelementen gebildet, die dem Senderarray und/oder Empfängerarray zugeordnet sind.

Beispielsweise können die Optikelemente von einstellbaren Blenden gebildet sein.

Durch diese Blenden können selektiv einzelne Empfangselemente des Empfängerarrays oder einzelne Sendeelemente des Senderarrays ausgeblendet werden.

Besonders vorteilhaft sind die Optikelemente von elektronisch steuerbaren Blenden gebildet.

Die Blenden können dann von der Steuer- und Auswerteeinheit des optischen Sensors gesteuert werden.

Derartige elektronisch steuerbare Blenden können von LCD-Displays gebildet sein. Weiterhin kann eine derartige variable Blende in Form einer TFT-(thin-film-transistor) Matrix ausgebildet sein, bei der einzelne Matrixelemente transparent oder lichtundurchlässig geschaltet werden können. Damit kann schnell und exakt die Größe und Form der Blendenöffnung vorgegeben werden.

Weiterhin können die Optikelemente von lichtreflektierenden oder lichtabsorbierenden Elementen gebildet sind.

Eine mögliche Realisierung derartiger Optikelemente ist deren Ausbildung als elektronisches Papier (eink). Bei einem solchen Optikelement werden einzelne Elemente, d.h. Pixel so umgeschaltet, dass sie Licht reflektieren oder absorbieren.

Gemäß einer besonders vorteilhaften Ausführungsform emittiert die Sendeeinheit Lichtstrahlen im nichtsichtbaren Bereich. Dann ist vorteilhaft eine Pilotsendeeinheit vorhanden, die sichtbare Pilotsendelichtstrahlen emittiert, die in den Strahlengang der Lichtstrahlen eingekoppelt sind.

Typische Sendeeinheiten für optische Sensoren, insbesondere Distanzsensoren die nach einem Impuls-Laufzeit-Verfahren Distanzmessungen durchführen, emittieren Lichtstrahlen im nichtsichtbaren Wellenlängenbereich, insbesondere im Infrarotbereich.

Zur Kontrolle der Funktion des optischen Sensors, insbesondere zur Durchführung von Einlernvorgängen, ist es wesentlich den Strahlengang der Lichtstrahlen zu visualisieren, d.h. sichtbar zu machen. Dies wird mit der Pilotsendeeinheit erreicht, da diese Pilotsendelichtstrahlen in den Strahlengang des Lichtstrahls eingekoppelt werden, wobei vorteilhaft die Lichtstrahlen und Pilotsendelichtstrahlen mit zumindest partiell überlappenden Strahlquerschnitten koaxial im Erfassungsbereich verlaufen.

Vorteilhaft sind Einkopplungsmittel vorhanden, mittels derer die Pilotsendelichtstrahlen in den Strahlengang der Lichtstrahlen eingekoppelt sind, wobei zweckmäßig das Einkopplungsmittel ein optisches Umlenkelement ist.

Beispielsweise ist das optische Umlenkmittel ein dichroitischer Spiegel oder ein Interferenzfilter.

Für den Fall, dass mittels Einstellmitteln die Form und/oder Größe des Lichtflecks der Lichtstrahlen des optischen Sensors zur Anpassung an die jeweilige Applikation verändert wird, ist es vorteilhaft, wenn der Lichtfleck der sichtbaren Pilotsendelichtstrahlen hierzu angepasst wird um so dem Benutzer den aktuellen Strahlverlauf der Lichtstrahlen genau anzuzeigen.

Hierzu sind weitere Einstellmittel vorhanden, mittels derer die Form und Größe des Lichtflecks der Pilotsendelichtstrahlen an den Lichtfleck der Lichtstrahlen angepasst wird.

Dabei können wiederum die Einstellmittel von einstellbaren Blenden gebildet sein.

Insbesondere sind die Einstellmittel von elektronisch steuerbaren Blenden gebildet.

Alternativ sind die Einstellmittel von lichtreflektierenden Elementen gebildet.

Gemäß einer besonders vorteilhaften Ausgestaltung weist die Pilotsendeeinheit eine Matrix von Pilotsendelichtstrahlen emittierenden Pilotsendeelementen auf.

Dann sind vorteilhaft die Einstellmittel von der Steuer- und Auswerteeinheit gebildet, wobei mittels der Steuer- und Auswerteeinheit eine Adressierung von Pilotsendeelementen erfolgt.

Die Erfindung wird im Folgenden anhand der Zeichnungen erläutert. Es zeigen:
- Figur 1:: Schematische Darstellung eines Ausführungsbeispiels des erfindungsgemäßen optischen Sensors.
- Figur 2a:: Beispiel einer Sendeeinheit des optischen Sensors gemäß Figur 1 mit einem Senderarray und diesem zugeordneten Einstellmitteln zur Einstellung des Lichtflecks der vom Senderarray emittierten Lichtstrahlen.
- Figur 2b:: Draufsicht auf das Senderarray und die Einstellmittel gemäß Figur 2a.
- Figur 3a:: Beispiel einer Empfangseinheit des optischen Sensors gemäß Figur 1 mit einem Empfängerarray und diesem zugeordneten Einstellmitteln zur Einstellung des Sichtfelds des Empfängerarray.
- Figur 3b:: Draufsicht auf das Empfängerarray und die Einstellmittel gemäß Figur 3a.
- Figur 4:: Erstes Ausführungsbeispiel des optischen Sensors mit einer zusätzlichen Pilotsendeeinheit.
- Figur 5:: Zweites Ausführungsbeispiel des optischen Sensors mit einer zusätzlichen Pilotsendeeinheit.
- Figur 6:: Erstes Applikationsbeispiel für den erfindungsgemäßen optischen Sensor.
- Figur 7:: Zweites Applikationsbeispiel für den erfindungsgemäßen optischen Sensor.
- Figur 8:: Drittes Applikationsbeispiel für den erfindungsgemäßen optischen Sensor.
- Figur 9:: Draufsicht auf das Empfängerarray des optischen Sensors gemäß Figur 8.

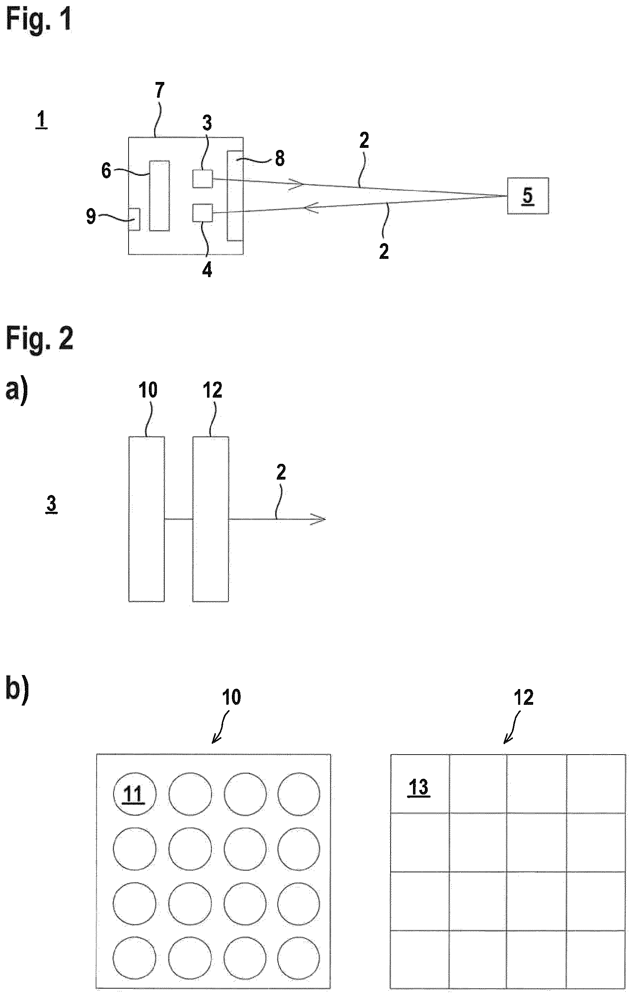

Figur 1 zeigt stark schematisiert ein Ausführungsbeispiel des erfindungsgemäßen optischen Sensors 1. Der optische Sensor 1 ist im vorliegenden Fall als Distanzsensor ausgebildet.

Mit dem Distanzsensor erfolgt eine Distanzbestimmung von Objekten 5 innerhalb eines Erfassungsbereichs. Die Distanzmessungen erfolgen dabei nach einem Impuls-Laufzeit-Verfahren. Hierzu weist der Distanzsensor generell eine Lichtstrahlen 2 emittierende Sendeeinheit 3 und eine Lichtstrahlen 2 empfangende Empfangseinheit 4 auf. Die Sendeeinheit 3 emittiert Lichtstrahlen 2 im nicht sichtbarem Wellenlängenbereich, insbesondere im Infrarotbereich. Die Sendeeinheit 3 emittiert dabei die Lichtstrahlen 2 in Form von Lichtimpulsen. Zur Distanzbestimmung wird die Laufzeit der von der Sendeeinheit 3 emittierten Lichtimpulse zu einem Objekt 5 und zurück zur Empfangseinheit 4 bestimmt. Die Distanzbestimmung erfolgt in einer Auswerteeinheit 6 abhängig von Empfangssignalen am Ausgang 9 der Empfangseinheit 4. Die Steuer- und Auswerteeinheit 6 ist generell von einer Rechnereinheit wie einem Mikroprozessor oder einem Microcontroller, einem ASIC oder dergleichen gebildet.

Die Steuer- und Auswerteeinheit 6 dient auch zur Steuerung der Sendeeinheit 3 und der Empfangseinheit 4.

Wie Figur 1 zeigt sind die Komponenten des optischen Sensors 1 in einem Gehäuse 7 integriert. In der Frontwand des Gehäuses 7 befindet sich eine transparente Frontscheibe 8 durch welche die Lichtstrahlen 2 geführt sind.

Als Ausgangssignal kann der optische Sensor 1 direkt den Distanzwert über einen Ausgang 9 ausgeben. Alternativ generiert die Auswerteeinheit 6 als Ausgangssignal abhängig von den ermittelten Distanzwerten ein binäres Schaltsignal, dessen Schaltzustände angeben, ob sich ein Objekt 5 innerhalb eines vorgegebenen Überwachungsbereichs befindet oder nicht.

Die Figuren 2a, 2b zeigen ein Ausführungsbeispiel einer Sendeeinheit 3 des erfindungsgemäßen optischen Sensors 1.

Die Sendeeinheit 3 besteht im vorliegenden Fall aus einem Senderarray 10, d.h. einer matrixförmigen Anordnung von Sendeelementen 11 in Form von VCSEL (vertical cavitiy surface emitting laser)-Dioden, die Lichtstrahlen 2 im Infrarotbereich emittieren. Die VCSEL-Dioden sind auf einem Chip integriert.

Der Sendeeinheit 3 ist ein Einstellmittel zugeordnet, mittels dessen die Form und Größe des Lichtflecks der von der Sendeeinheit 3 emittierten Lichtstrahlen 2 vorgegeben werden kann.

Im vorliegenden Fall ist das Einstellmittel als Optikelement in Form einer elektronisch steuerbaren Blende 12 mit mehreren matrixförmigen Blendensegmenten 13, die jeweils einer VCSEL-Diode zugeordnet sind, ausgebildet. Das Optikelement wird von der Steuer- und Auswerteeinheit 6 gesteuert, so dass selektiv nur Licht einzelner VCSEL-Dioden in den Erfassungsbereich abgestrahlt wird.

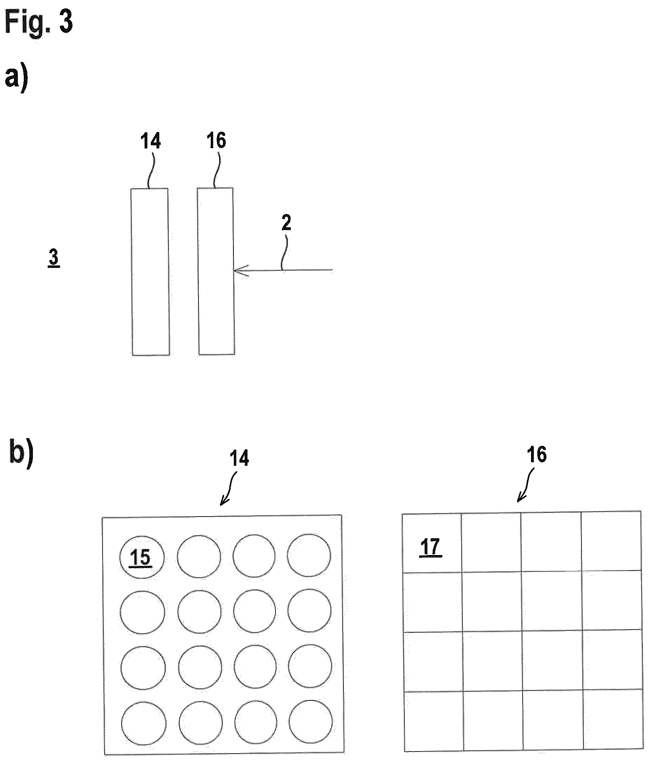

Die Figuren 3a, 3b zeigen ein Ausführungsbeispiel einer Empfangseinheit 4 des erfindungsgemäßen optischen Sensors 1.

Die Empfangseinheit 4 besteht im vorliegenden Fall aus einem Empfängerarray 14, d.h. einer matrixförmigen Anordnung von Empfangselementen 15 in Form von SPAD (single-photon avalanche diode).

Der Empfangseinheit 4 ist ein Einstellmittel zugeordnet, mittels dessen das Sichtfeld der Empfangseinheit 4 verändert werden kann.

Im vorliegenden Fall ist das Einstellmittel als Optikelement in Form einer elektronisch steuerbaren Blende 16 mit mehreren matrixförmigen Blendensegmenten 17, die jeweils einem Empfangselement 15 zugeordnet sind, ausgebildet. Das Optikelement wird von der Steuer- und Auswerteeinheit 6 gesteuert, so dass selektiv nur auf vorgegebene Empfangselemente 15 von einem Objekt 5 zurückreflektierte Lichtstrahlen 2 auftreffen.

Die Blenden 12, 16 können als TFT-Matrix oder LCD-Display ausgebildet sein.

Anstelle der Blenden 12, 16 können auch Optikelemente in Form von lichtreflektierenden oder lichtabsorbierenden Elementen, wie z.B. einem elektronischen Papier (eink.) vorgesehen sein.

Auch ist es möglich, dass die Einstellmittel von der Steuer- und Auswerteeinheit 6 gebildet sind, wobei mittels der Steuer- und Auswerteeinheit 6 eine Adressierung von Sendeelementen 11 und/oder Empfangselementen 15 erfolgt.

Zur Vorgabe des Lichtflecks der Lichtstrahlen 2 bzw. zur Vorgabe des Sichtfelds der Empfangseinheit 4 können in einem Einlernvorgang selektiv aktivierte Sendeelemente 11 und/oder Empfangselemente 15 vorgegeben werden.

Alternativ können durch Eingabe von Eingabegrößen über eine Schnittstelle aktivierte Sendeelemente 11 und/oder Empfangselemente 15 vorgegeben werden.

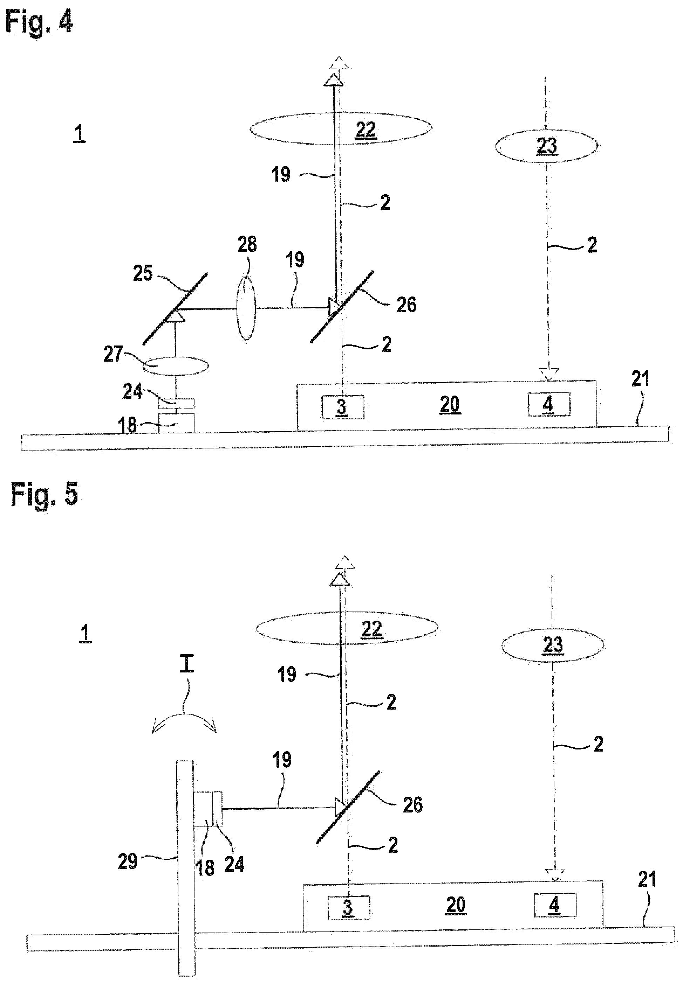

Die Figuren 4 und 5 zeigen eine Erweiterung des optischen Sensors 1 gemäß Figur 1 dahingehend, dass neben der Sendeeinheit 3 und Empfangseinheit 4 als weitere optoelektronische Einheit eine Pilotsendeeinheit 18 vorgesehen ist, die Pilotsendelichtstrahlen 19 im sichtbaren Wellenlängenbereich emittiert. Die Pilotsendelichtstrahlen 19 werden in den Strahlengang der Lichtstrahlen 2 so eingekoppelt, dass die Pilotsendelichtstrahlen 19 und Lichtstrahlen 2 im Erfassungsbereich mit zumindest partiell überlappenden Strahlquerschnitten koaxial verlaufen. Damit wird mit den Pilotsendelichtstrahlen 19 der Strahlengang der Lichtstrahlen 2 sichtbar gemacht.

Bei der Ausführungsform gemäß Figur 4 sind die Sendeeinheit 3 und die Empfangseinheit 4 in einem Laufzeitmodul 20 zusammengefasst, das auf einer Leiterplatte 21 gelagert ist. Vorteilhaft ist die Sendeeinheit 3 als Senderarray 10 und die Empfangseinheit 4 als Empfängerarray 14 ausgebildet.

Der Sendeeinheit 3 und/oder der Empfangseinheit 4 kann ein in Figur 4 nicht dargestelltes Optikelement, z.B. in Form einer Blende 12, 16 wie in den Figuren 2 und 3 dargestellt, zugeordnet sein.

Der Sendeeinheit 3 ist weiterhin eine Sendeoptik in Form einer Sendelinse 22 nachgeordnet. Dadurch werden kollimierte Lichtstrahlen 2 erhalten. Zur Fokussierung der von einem Objekt 5 zum optischen Sensor 1 zurückreflektierten Lichtstrahlen 2 ist der Empfangseinheit 4 eine Empfangsoptik in Form einer Empfangslinse 23 vorgeordnet.

Die Pilotsendeeinheit 18 kann beispielsweise aus einer Leuchtdiodenanordnung bestehen, wobei diese eine oder mehrere Leuchtdioden umfassen kann. Vorteilhaft entspricht die Anordnung der Leuchtdioden der Pilotsendeeinheit 18 der Anordnung der Sendeelemente 11 des Senderarrays 10.

Bei der Ausführungsform gemäß Figur 4 ist die Pilotsendeeinheit 18 auf derselben Leiterplatte 21 gelagert, auf welcher auch das Laufzeitmodul 20 gelagert ist.

Der Pilotsendeeinheit 18 ist eine Blende 24 zugeordnet, die der der Sendeeinheit 3 zugeordneten Blende 12 entspricht. Auch die Blende 24 wird von der Steuer- und Auswerteeinheit 6 gesteuert. Mit der Blende 24 kann der Lichtfleck der Pilotsendelichtstrahlen 19 exakt an den Lichtfleck der Lichtstrahlen 2 angepasst werden.

Bei der Anordnung gemäß Figur 4 sind Einkopplungsmittel vorhanden, mittels derer die Pilotlichtstrahlen 19 so in den Strahlengang der Lichtstrahlen 2 eingekoppelt werden, dass die Pilotlichtstrahlen 19 und Lichtstrahlen 2 koaxial verlaufen, vorzugsweise innerhalb des gesamten Überwachungsbereichs.

Im vorliegenden Fall sind als Einkopplungsmittel ein Umlenkspiegel 25 und ein Umlenkelement 26 in Form eines dichroitischen Spiegels vorgesehen. Die Pilotlichtstrahlen 19 werden am Umlenkspiegel 25 reflektiert. Der dichroitische Spiegel weist eine wellenlängenabhängige Charakteristik auf und reflektiert die Pilotlichtstrahlen 19. Andererseits ist der dichroitische Spiegel durchlässig für die Lichtstrahlen 2.

Durch diese Einkopplungsmittel wird ein koaxialer Strahlengang der Lichtstrahlen 2 und Pilotlichtstrahlen 19, erhalten, so dass mit den Pilotlichtstrahlen 19 der Strahlengang der Lichtstrahlen 2 visualisiert wird.

Zwischen der Pilotsendeeinheit 18 und dem Umlenkspiegel 25 befindet sich eine erste Linse 27. Zwischen dem Umlenkspiegel 25 und dem dichroitischen Spiegel befindet sich eine zweite Linse 28. In einer weiteren Ausführungsform kann Linse 27 oder Linse 28 entfallen.

Die Blende 24 kann so angeordnet sein, dass nicht die emittierende Fläche der Pilotsendeeinheit 18 abgebildet wird, sondern die Öffnung der Blende 24. Dabei bildet vorteilhaft eine Halterung für das optische Element 25, den Umlenkspiegel 26 und die Linsen 27 und 28 sowie die Sendelinse 22 ein gemeinsames Spritzgussteil. Toleranzen können damit reduziert werden und eine Ausrichtung des Pilotstrahlengangs kann entfallen.

Die Linsen 27, 28 sind vorzugsweise steuerbar um den Verlauf der Pilotlichtstrahlen 19 im Überwachungsbereich variabel einstellen zu können.

Figur 5 zeigt ein weiteres Ausführungsbeispiel des optischen Distanzsensors. Im Unterschied zur Ausführungsform gemäß Figur 4 ist die Pilotsendeeinheit 18 auf einer weiteren Leiterplatte 29 angeordnet, die schwenkbar an der ersten Leiterplatte 21 gelagert ist. Durch eine Schwenkbewegung der Leiterplatte 21, 29 (veranschaulicht mit dem Doppelpfeil I) kann die Richtung von der Pilotsendeeinheit 18 emittierten sichtbaren Pilotlichtstrahlen 19 eingestellt werden.

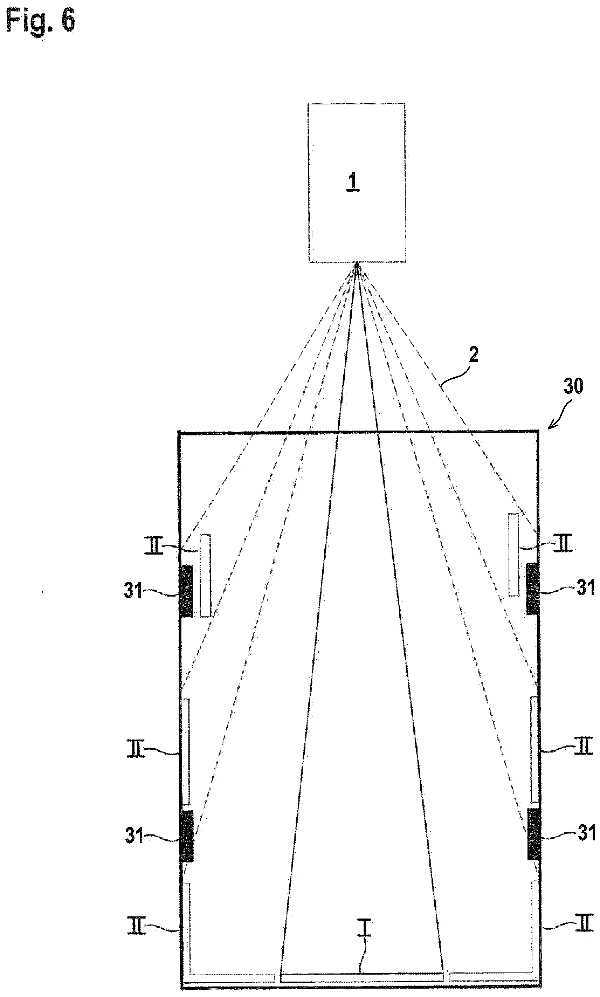

Figur 6 zeigt ein erstes Applikationsbespiel für den erfindungsgemäßen optischen Sensor 1.

Der optische Sensor 1 befindet sich oberhalb eines an einer Oberseite offenen Gefäßes 30. Mit dem optischen Sensor 1 wird der Füllstand eines nicht dargestellten festen, pulverförmigen oder flüssigen Mediums im Gefäß 30 bestimmt.

Figur 6 zeigt das leere Gefäß 30 und die vom optischen Sensor 1 in Richtung des Gefäßes 30 emittierten Lichtstrahlen 2, die mit den sichtbaren Pilotsendelichtstrahlen 19 visualisiert werden können.

An der Innenwand des Gefäßes 30 befinden sich Störkonturen 31 in Form von Erhebungen. Von dort zurückreflektierte Lichtstrahlen 2 können die Füllstandsmessungen verfälschen.

In einem Einlernvorgang wird der Innenraum des leeren Gefäßes 30 vermessen. Anhand der ermittelten Distanzwerte für die Empfangselemente 15 des Empfängerarray 14 kann bestimmt werden, mit welchem Empfangselement 15 der Boden detektiert wird (hier werden die maximalen Distanzwerte erhalten) und mit welchem Empfangselement 15 die Seitenwand und eventuelle Störkonturen 31 detektiert werden (hier werden kleinere Distanzwerte erhalten).

Abhängig hiervon werden im Einlernvorgang nur diejenigen Empfangselemente 15 des Empfängerarray 14 ausgewählt, mit denen der Bodenbereich des Gefäßes 30 erfasst wird (Figur 6 mit I bezeichnet). Die anderen Empfangselemente 15, mit denen die Seitenwand erfasst wird (in Figur 6 mit II bezeichnete Bereiche) werden mit der Blende 16 ausgeblendet. Alternativ wird das Empfängerarray 14 wird so umparametriert, dass aus den Ergebnissen der matrixförmigen Empfangsfläche nur die Ergebnisse von denjenigen Flächen benutzt werden, welche auf den Boden des Gefäßes 30 schauen.

Dadurch ist gewährleistet, dass in einem auf den Einlernvorgang folgenden Arbeitsbetrieb mit den nicht ausgeblendeten Empfangselementen 15 der Füllstand im Gefäß 30 störungsfrei detektiert werden kann.

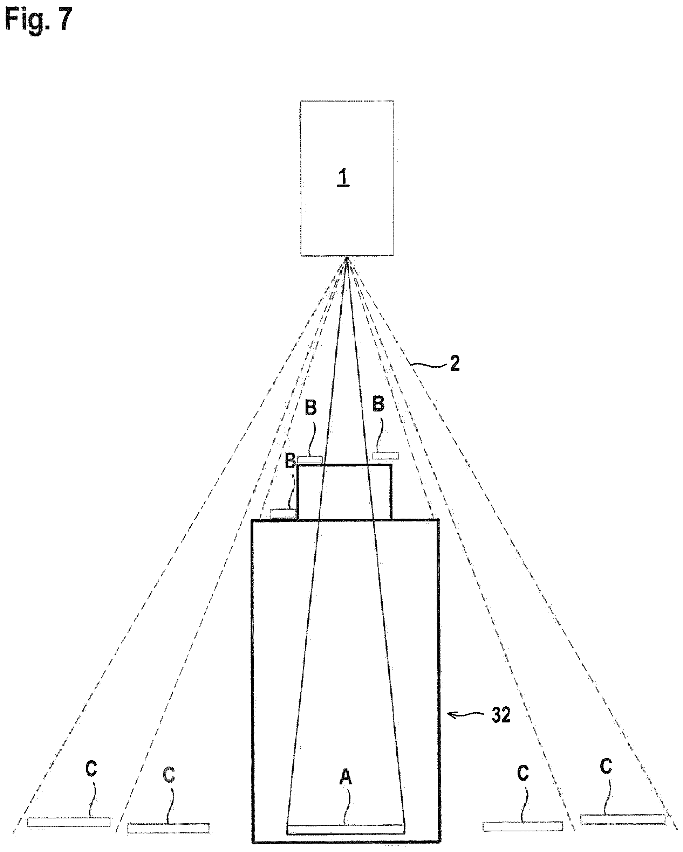

Alternativ zur Ausblendung von Empfangselementen 15 des Empfängerarray 14 kann durch Ausblenden von Sendeelementen 11 des Senderarray 10 mit der Blende 12 der Öffnungswinkel der Lichtstrahlen 2 so eingestellt werden, dass die Lichtstrahlen 2 des Senderarray 10 nur auf den Bereich I treffen. Dies gilt auch für die folgenden Ausführungsbeispiele gemäß den Figuren 7 bis 9.

Figur 7 zeigt ein weiteres Applikationsbeispiel, bei welchem mit dem optischen Sensor 1 der Füllstand in einer Flasche 32 bestimmt wird. Der optische Sensor 1 ist oberhalb der Flasche montiert, so dass Lichtstrahlen 2 des optischen Sensors 1 in den Innenraum der Flasche geführt sind.

Figur 7 zeigt die Situation bei einem Einlernvorgang, in welchem die leere Flasche mit dem optischen Sensor 1 detektiert wird. Die Lichtstrahlen 2 des optischen Sensors 1 weisen einen großen Öffnungswinkel auf, so dass zentrale Lichtstrahlen 2 auf den Bodenbereich A der Flasche treffen, angrenzende Lichtstrahlen 2 auf den oberen Randbereich B der Flasche treffen und äußere Lichtstrahlen 2 auf den Untergrund C treffen, auf dem die Flasche steht.

Durch Analyse der mit dem Empfangselement 15 des Empfängerarray 14 registrierten Empfangssignale und der daraus bestimmten Distanzwerte wird die Flasche durch Detektion deren Randbereiche B vom Untergrund C unterschieden. Dann erfolgt eine Ausblendung von Empfangselementen 15 des Empfängerarray 14 mit der Blende 16 derart, dass nur die Empfangselemente 15 im nachfolgenden Arbeitsbetrieb aktiviert sind, die auf den Bodenbereich A der Flasche gerichtet sind. Damit ist im Arbeitsbetrieb eine fehlerfreie, störungssichere Füllstandsbestimmung gewährleistet.

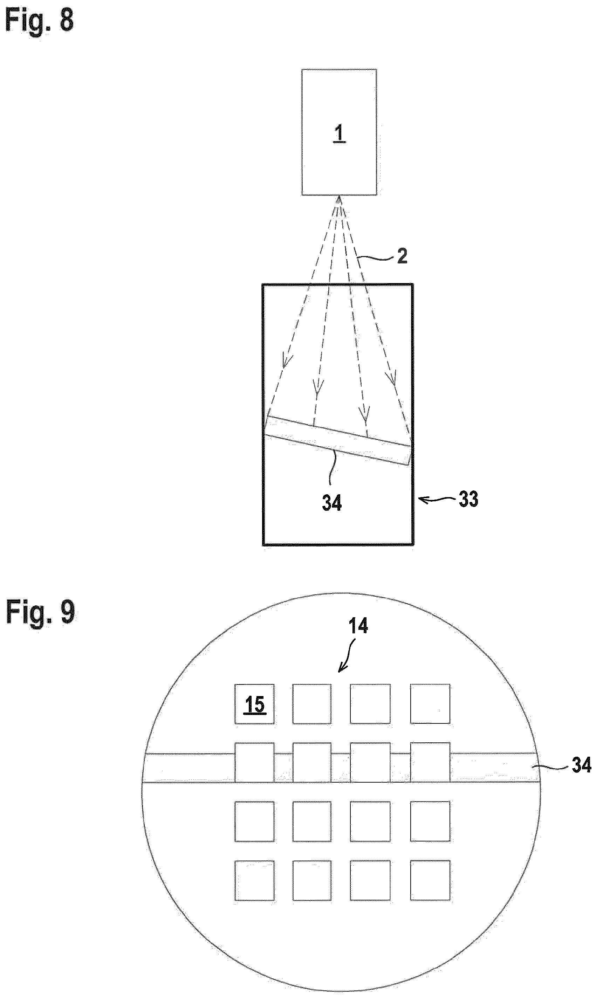

Figur 8 zeigt eine weiteres Ausführungsbeispiel, bei dem mit dem optischen Sensor 1 der Füllstand eines an seiner Oberseite offenen Tanks 33 bestimmt wird.

Wie Figur 8 zeigt ist der optische Sensor 1 oberhalb des Behälters montiert, so dass die Lichtstrahlen 2 des optischen Sensors 1 in den Tank 33 geführt sind.

Im Tank 33 verläuft ein Rohr 34. In einem Einlernvorgang wird bei leerem Behälter das Rohr 34 detektiert. Mit der Blende 16 werden die Empfangselemente 15 des Empfängerarray 14, mit denen das Rohr 34 detektiert wird, ausgeblendet, wie in Figur 9 veranschaulicht. Dadurch wird vermieden, dass während des Arbeitsbetriebs das Rohr 34 die Füllstandsmessungen verfälscht.

### Bezugszeichenliste

- (1): optischer Sensor
- (2): Lichtstrahl
- (3): Sendeeinheit
- (4): Empfangseinheit
- (5): Objekt
- (6): Auswerteeinheit
- (7): Gehäuse
- (8): Frontscheibe
- (9): Ausgang
- (10): Senderarray
- (11): Sendeelement
- (12): Blende
- (13): Blendensegment
- (14): Empfängerarray
- (15): Empfangselement
- (16): Blende
- (17): Blendensegment
- (18): Pilotsendeeinheit
- (19): Pilotsendelichtstrahl oder Pilotlichtstrahl
- (20): Laufzeitmodul
- (21): Leiterplatte
- (22): Sendelinse
- (23): Empfangslinse
- (24): Blende
- (25): Umlenkspiegel
- (26): Umlenkelement
- (27): erste Linse
- (28): zweite Linse
- (29): Leiterplatte
- (30): Gefäß
- (31): Störkontur
- (32): Flansch
- (33): Tank
- (34): Rohr

## Patentansprüche

1. Optischer Sensor (1) zur Erfassung von Objekten (5) in einem Erfassungsbereich, mit einer Lichtstrahlen (2) emittierenden Sendeeinheit (3), einer Lichtstrahlen (2) empfangenen Empfangseinheit (4) und mit einer Steuer- und Auswerteeinheit (6), in welcher abhängig von Empfangssignalen der Empfangseinheit (4) ein Ausgangssignal generiert wird, **dadurch gekennzeichnet, dass** die Sendeeinheit (3) ein Senderarray (10) mit einer Anzahl von Sendeelementen (11) ist, wobei dem Senderarray (10) Einstellmittel zugeordnet sind, mittels derer die Lichtverteilung und Größe des Lichtflecks der emittierten Lichtstrahlen (2) vorgegeben wird, und/oder dass die Empfangseinheit (4) ein Empfängerarray (14) mit einer Anzahl von Empfangselementen (15) ist, wobei dem Empfängerarray (14) Einstellmittel zugeordnet sind, mittels derer der Sichtbereich des Empfängerarrays (14) vorgegeben wird.

2. Optischer Sensor (1) nach Anspruch 1, **dadurch gekennzeichnet, dass** dieser ein Distanzsensor ist, wobei Distanzmessungen in Form von Impuls-Laufzeit-Messungen durchgeführt werden, und/oder dass dessen Ausgangssignale Distanzmesswerte oder binäre Schaltsignale sind.

3. Optischer Sensor (1) nach einem der Ansprüche 1 oder 2, **dadurch gekennzeichnet, dass** das Senderarray (10) ein VCSEL (vertical cavity surface emitting laser)-Array ist, und/oder dass das Empfängerarray (14) ein SPAD (single photon avalanche diode)-Array ist.

4. Optischer Sensor (1) nach einem der Ansprüche 1 bis 3, **dadurch gekennzeichnet, dass** in einem Einlernvorgang selektiv aktivierte Sendeelemente (11) und/oder Empfangselemente (15) vorgegeben werden, oder dass durch Eingabe von Eingabegrößen über eine Schnittstelle aktivierte Sendeelemente (11) und/oder Empfangselemente (15) vorgegeben werden.

5. Optischer Sensor (1) nach einem der Ansprüche 1 bis 4, **dadurch gekennzeichnet, dass** die Einstellmittel von der Steuer- und Auswerteeinheit (6) gebildet sind, wobei mittels der Steuer- und Auswerteeinheit (6) eine Adressierung von Sendeelementen (11) und/oder Empfangselementen (15) erfolgt, und/oder dass die Einstellmittel von Optikelementen gebildet sind, die dem Senderarray (10) und/oder Empfängerarray (14) zugeordnet sind.

6. Optischer Sensor (1) nach Anspruch 5, **dadurch gekennzeichnet, dass** die Optikelemente von elektronisch steuerbaren Blenden (12, 16) gebildet sind, oder dass die Optikelemente von lichtreflektierenden oder lichtabsorbierenden Elementen gebildet sind.

7. Optischer Sensor (1) nach einem der Ansprüche 1 bis 6, **dadurch gekennzeichnet, dass** die Sendeeinheit (3) Lichtstrahlen (2) im nichtsichtbaren Bereich emittiert, und dass eine Pilotsendeeinheit (18) vorhanden ist, die sichtbare Pilotsendelichtstrahlen (19) emittiert, die in den Strahlengang der Lichtstrahlen (2) eingekoppelt sind, wobei die Lichtstrahlen (2) und Pilotsendelichtstrahlen (19) mit zumindest partiell überlappenden Strahlquerschnitten koaxial im Erfassungsbereich verlaufen.

8. Optischer Sensor (1) nach Ansprüche 7, **dadurch gekennzeichnet, dass** Einkopplungsmittel vorhanden sind, mittels derer die Pilotsendelichtstrahlen (19) in den Strahlengang der Lichtstrahlen (2) eingekoppelt sind.

9. Optischer Sensor (1) nach Anspruch 8, **dadurch gekennzeichnet, dass** das Einkopplungsmittel ein optisches Umlenkelement (26) ist, wobei dass das optisches Umlenkmittel ein dichroitischer Spiegel oder ein Interferenzfilter ist.

10. Optischer Sensor (1) nach einem der Ansprüche 7 bis 9, **dadurch gekennzeichnet, dass** Einstellmittel vorhanden sind, mittels derer die Form und Größe des Lichtflecks der Pilotsendelichtstrahlen (19) veränderbar ist.

11. Optischer Sensor (1) nach Anspruch 1, **dadurch gekennzeichnet, dass** die Einstellung in einem Teachalgorithmus oder manuell erfolgt, wobei durch die Einstellung eine Anpassung an den Erfassungsbereich erfolgt.

12. Optischer Sensor (1) nach Anspruch 10 oder 11, **dadurch gekennzeichnet, dass** die Einstellmittel von elektronisch steuerbaren Blenden (24) gebildet sind, oder dass die Einstellmittel von lichtreflektierenden Elementen gebildet sind.

13. Optischer Sensor (1) nach einem der Ansprüche 7 bis 12, **dadurch gekennzeichnet, dass** die Pilotsendeeinheit (18) eine Matrix von Pilotsendelichtstrahlen (19) emittierenden Pilotsendeelementen aufweist.

14. Optischer Sensor (1) nach Anspruch 13, **dadurch gekennzeichnet, dass** die Einstellmittel von der Steuer- und Auswerteeinheit (6) gebildet sind, wobei mittels der Steuer- und Auswerteeinheit (6) eine Adressierung von Pilotsendeelementen erfolgt.

15. Optischer Sensor (1) nach einem der Ansprüche 1 bis 14, **dadurch gekennzeichnet, dass** dieser ein Füllstandssensor ist.
